# EUROPEAN PATENT APPLICATION

(11) **EP 4 450 293 A1**
(43) Date of publication of application: **23.10.2024**
(21) Application number: 24169395.1
(22) Date of filing: 10.04.2024
(51) Int. Cl.: B42C 5/00, B23C 5/08, B42C 5/04

(54) **MILLING DEVICE FOR BINDING MACHINES AND BINDING MACHINE COMPRISING SUCH DEVICE**

(30) Priority: 21.04.2023 IT 202300007827
(71) Applicant: K.G.S. S.R.L. UNIPERSONALE, 35035 Mestrino (PD) (IT)
(72) Inventor: RACCANELLO, Roberto, 35125 PADOVA (IT)
(74) Representative: Maroscia, Antonio

(57) **Abstract**

A milling device **(1)** for binding machines **(2),** for milling the back **(D)** of blocks **(B)** of sheets **(S)** to be bound, in which the machine **(2)** comprises a support plane **(P)** of the back **(D)** of the blocks **(B)** during their advancement. The device **(1)** comprises a disc-shaped plate **(8)** defining a main axis **(V)** and having a substantially circular outer peripheral edge **(8A),** an upper face **(9)** arranged facing the back **(D)** and a lower face **(10)** coupled to an electro-spindle **(3),** one or more cutting tools **(13)** which can be anchored in one or more centring points **(A)** of the upper face **(9)** to grind the back **(D)** by rotating the plate **(8)** and wherein each tool **(13)** comprises a cylindrical body **(14)** with a cutting edge **(15)** having a curved profile with centreline **(M).** There are provided for means **(21)** for anchoring the cylindrical body **(14)** to the plate **(8)** so that the centreline **(M)** is parallel to the tangent **(T)** on the outer peripheral edge **(8A)** in the centring point **(A)** of the tool **(13)** and so as to selectively direct the centreline **(M)** towards the one or the other rotation direction **(R).** A binding machine **(2)** which comprises the rotary milling tool **(1)** described above.

## Description

### Field of the invention

**The** present invention generally relates to the technical field of the book binding and it particularly relates to a milling device for binding machines.

The invention also relates to a binding machine comprising the milling device mentioned above.

### State of the art

The use of rotary devices for processing the back of blocks of sheets to be bound before applying one or more adhesive layers for gluing a cover thereon has been long known in the printing and book binding industry.

Generally, such rotary devices comprise a disc-shaped plate which rotates around a main axis, which can be coupled to an electro-spindle and having an upper face arranged facing the block to be milled provided with machining tools.

During the rotation of the disc-shaped plate, the machining tools carry out a milling on the sheets of the block advancing along a support plane for the blocks substantially perpendicular to the main axis.

The block of sheets are milled so as to level the surface of the back so as to allow the gluing of a cover to form a book.

Generally, a first type of machining tool, configured to carry out only the milling of the sheets of the block and a second type of machining tools configured to carry out the roughening of the back of the block, also called corrugation, are applied on the disc-shaped plate to increase its contact surface with the adhesive which is subsequently spread on the back of the block before it is coupled with a cover.

The document US3828409 discloses a device for milling the back of a block of sheets which comprises a plate coupled to an electro-spindle on which there are welded a plurality of milling knives, arranged radially on the plate and each having a linear cutting edge.

A drawback of such prior art solution lies in the fact that the milling knives are not removable, with resulting increase in the complexity for their fitting and removal.

In order to at least partially overcome this drawback, there have been developed devices for milling the back of a block of sheets in which the cutting tools are removable.

The document JPH01240214 discloses a disc-shaped plate having a plurality of fitting holes adapted to removably house corresponding milling tools, which are fixed to the disc using bolts.

However, despite facilitating the maintenance and the replacement of the milling tools, such prior art solution does not provide for the possibility of changing the angle of incidence of the cutting profile of the tools on the block of sheets being processed.

Another drawback of the prior art milling tools lies in the fact that the milling operation requires a high cutting power given that the cutting edge is linear. Such linear edge is rotated by the disc disco in a circular path and therefore it creates different cutting angles on the paper along its path.

Such effect entails a decrease in the cutting capacity as well as a gripping and dragging of the sheets which are at the end of the cutting path with resulting tearing thereof.

### Technical problem

In the light of the state-of-the-art, the technical problem addressed by the present invention is to provide a milling device provided with a cutting tool having an excellent cutting angle along its entire milling path and which - at the same time - allows to reduce the power required to carry out the milling operation.

### Summary of the invention

The object of the present invention is to solve the aforementioned problem by providing a milling device for binding machines that are highly efficient and cost-effective.

A particular object of the present invention is to provide a milling device for binding machines of the type indicated above which comprises a cutting profile having an excellent cutting angle along its entire milling path.

Another object of the present invention is to provide milling for binding machines of the type indicated above which comprises a cutting tool which can be directed as the direction of rotation of the disc-shaped plate on which it is fitted changes.

A further object of the present invention is to provide a milling device for binding machines of the type indicated above which comprises a cutting tool having a portion adapted to push the removed material downwards.

Another object of the present invention is to provide a milling device for binding machines of the type indicated above which has a rigid and durable cutting edge.

A further object of the present invention is to provide a milling device for binding machines of the type indicated above which has a cutting edge that is very sharp.

Another object of the present invention is to provide a milling device of the type indicated above which does not require high power to carry out the milling operation.

A further object of the present invention is to provide a binding machine which is fitted with the device indicated above.

The objects mentioned above and others which will be more apparent hereinafter are attained by a milling device for binding machines, according to claim 1, for milling the back of sheets to be bound, wherein the machine comprises a plane for supporting the blocks during their advancement. The device comprises a disc-shaped plate defining a main axis and having a circular outer peripheral edge, an upper face arranged facing the block to be milled and a lower face with a tang for coupling to an electro-spindle.

Further, the device comprises one or more cutting tools which can be anchored in one or more centring points of the upper face to mill the back by rotating the plate.

Advantageously, each cutting tool comprises a cylindrical body with a cutting edge having a curved profile with centreline and there are provided for means for anchoring the cylindrical body to the plate so that the centreline is parallel to the tangent on the outer peripheral edge in the centring point of the tool and so as to selectively direct the centreline towards the one or the other rotation direction.

Furthermore, the cylindrical body of the cutting tool has a secondary axis substantially parallel to the main axis and an end portion having an upper surface provided with the cutting edge and a recess adapted to move the material removed from the back away from the block.

Advantageously, the cylindrical body facilitates the centring of the cutting tool on the disc-shaped plate at the centring points.

Furthermore, the cutting edge of the cutting tool comprises an upper milling surface that is substantially perpendicular to the main axis and defining a milling plane.

The cutting edge comprises a cutting angle comprised between 35° and 45° with respect to the milling plane, preferably equal to 40° and a machining angle comprised between 30° and 50° with respect to the milling plane, preferably equal to 40°.

Thanks to this combination of characteristics, the device improves the milling precision and quality, reducing the machining times and increasing the efficiency of the binding machine as a whole.

Furthermore, thanks to the anchoring means of the cylindrical body, one can selectively direct the centreline towards the one or the other rotation direction of the plate so as to allow an efficient milling in both directions of rotation.

Therefore, the milling device for binding machines described herein represents an important innovation in the field of milling blocks of sheets to be bound, allowing to obtain precise and high-quality machining operations rapidly and effectively.

As a matter of fact, the arrangement of the cutting tool is such to maintain the cutting geometry of the tool on the back constant during the rotation of the plate and containing the contact surface of the cutting edge with the back, with resulting increase in the pressure between the tool and the back and decrease in the cutting power.

The invention also relates to a binding machine for machining the back of blocks of sheets to be bound on which there is fitted the milling device described above, according to claim 9.

Advantageous embodiments of the invention are attained according to the dependent claims.

### Brief description of the drawings

Further characteristics and advantages of the invention will be more apparent in the light of the detailed description of a preferred but not exclusive embodiment of a milling device for binding machines and a binding machine like the ones mentioned above, shown by way of non-limiting example with reference to the drawings below, wherein:
**FIG. 2** is a perspective view of a detail of the machine of Fig. 1 provided with the milling device according to the invention;
**FIGS. 3-5** are respectively a top and lateral perspective view of the milling device of Fig. 2;
**FIG. 6** is a schematic view of the device of Fig. 4 in a first and in a second operative configuration;
**FIGS. 7-9** are respectively a lateral and top perspective view of a cutting tool which can be anchored to the milling device of Fig. 3;
**FIG. 10** is an enlarged view of a cross-section of tool of Fig. 9.

### Detailed description of a preferred embodiment

With particular reference to the figures, there is shown a milling device indicated in their entirety with reference numeral **1,** designed to be installed on a binding machine **2** and configured to mill the back **D** of blocks **B** of sheets **S** to be bound.

Such milling machining is aimed at levelling a surface of the back **D** of the blocks **B** and to eliminate part of the surplus paper from the back **D.**

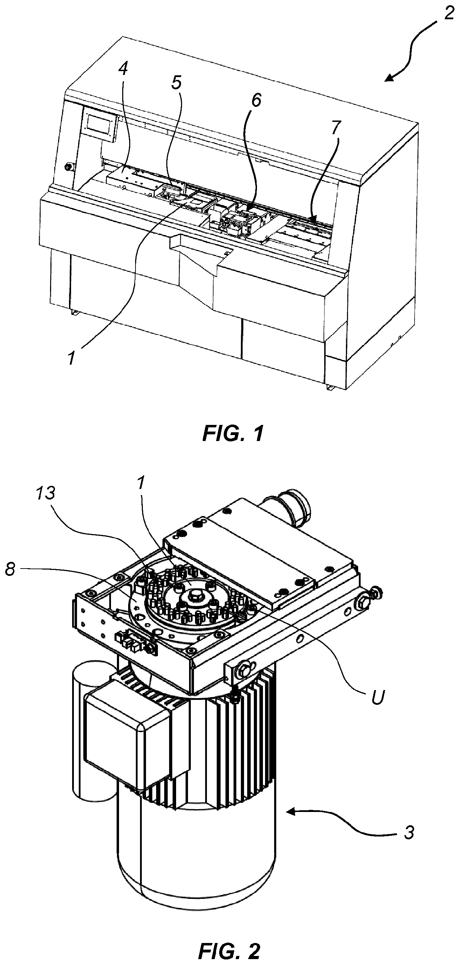

The binding machine **2** comprises a support plane **P** of the back **D** of the blocks **B** during their advancement along a substantially horizontal direction **H** and an electro-spindle **3** on which there is fitted the milling device **1,** as better shown in **FIGS. 1** and **2****.**

Suitably, the block **B** is placed on the support plane **P** and advanced along the machine **2** by means of motor-driven clamp **4** having a pair of plates **5** adapted to retain the block **B** at its side walls.

In a per se known manner, the clamp **4** may move along the direction **H** along the machine **2** firstly passing through an area for machining the back **D** of the block **B,** through the milling device **1,** subsequently a gluing area **6** for applying glue to the back **D** and lastly a finishing area **7** for applying a cover to the block **B** of sheets **S.**

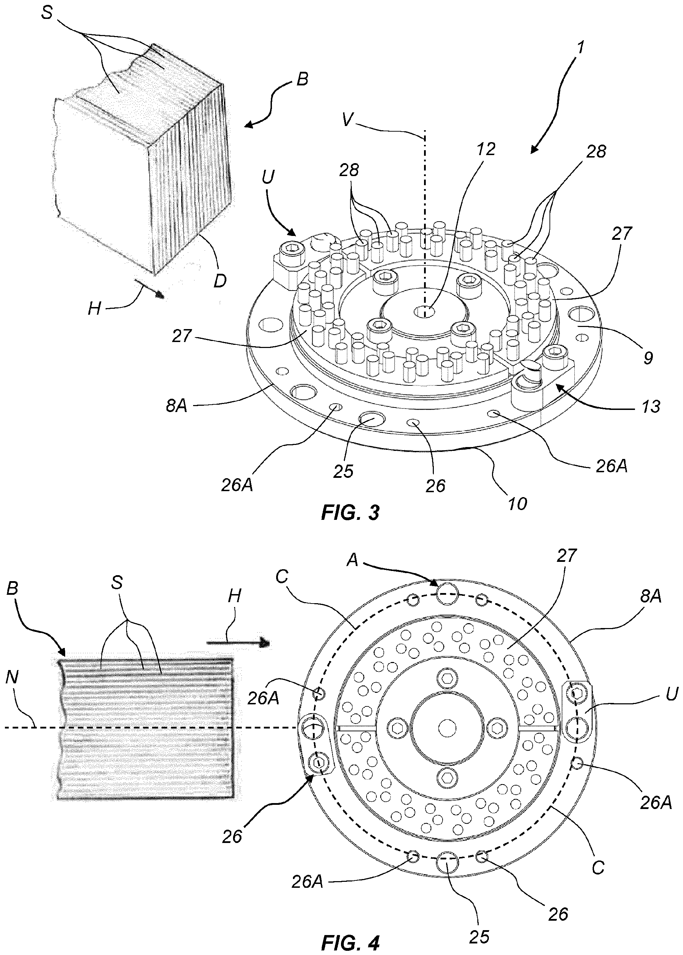

With reference to the **FIGS. 3-5****,** in the preferred embodiment of the invention, the milling device **1** comprises a disc-shaped plate **8** defining a main axis **V** and having an upper face **9** arranged facing the back **D** of the block **B** to be milled and a lower face **10** coupled to the electro-spindle **3,** for example by means of a body or tang **11.**

Preferably, for an excellent machining of the back **D,** the median line **N** of the block of sheets **B** being machined intersects the main axis **V** of the disc-shaped plate **8,** as better shown in **FIG. 4****.**

In an embodiment, the plate **8** has a circular outer peripheral edge **8A** and a central hole **12** for inserting the drive shaft of the electro-spindle **3** to which there will be coupled - by means of appropriate splining means, such as for example a key - a tab, a polygonal cross-section, a grooved cross-section or other similar types of coupling.

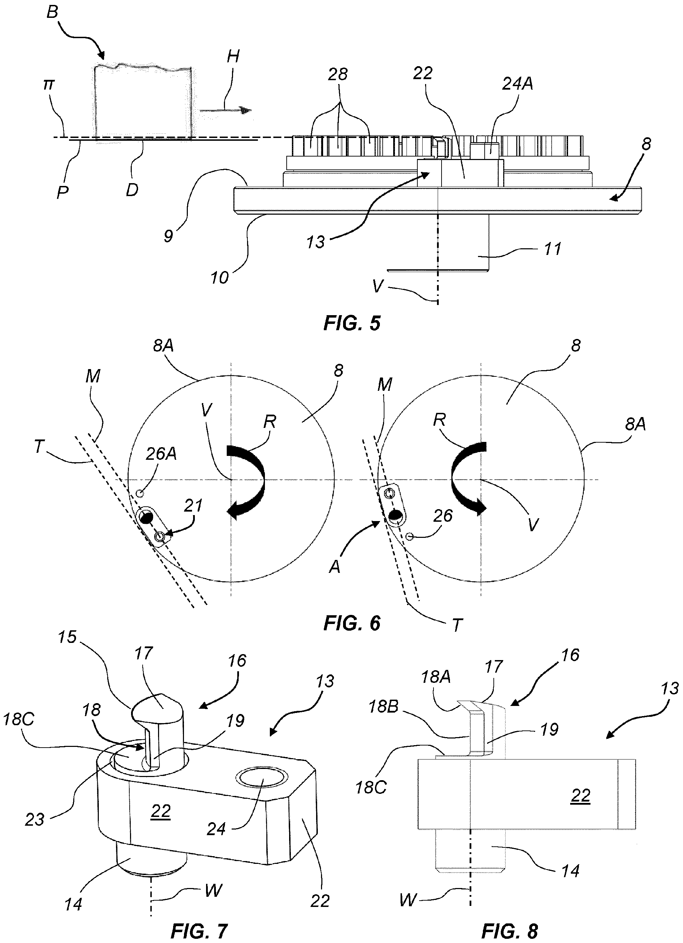

Furthermore, the electro-spindle **3** is configured to rotatably drive - at a constant and adjustable velocity - the disc-shaped plate **8** around the main axis **V** and in a selectively clockwise or counterclockwise rotation direction **R,** as better schematised in **FIG. 6****.**

On the upper face **9** of the disc-shaped plate **8** there can be anchored - in special centring points **A** - one or more cutting tools **13** adapted to mill the back **D** of a block **B** by rotating the plate **8.**

Advantageously, each cutting tool **13** comprises a cylindrical body **14** with a cutting edge **15** having - in plan view - a curved profile coincident with a circle arc and defining a centreline **M,** as better shown in **FIG. 6****.**

Hereinafter, the expression "centreline" will be used to indicate a line **M** which cuts the circle arc into two identical and symmetrical halves.

In an embodiment, the cutting tool **13** is fixed on the plate **8** so that its centreline **M** is substantially parallel to the tangent **T** on the outer peripheral edge **8A** of the plate **8** in the centring point **A** of the tool **13.**

Such particular configuration and arrangement of the cutting edge **15** allows the cutting geometry of the tool **13** on the back **D** to remain constant during the rotation of the plate **8** and the contact surface of the cutting edge **15** with the back **D** to be very small, with resulting increase in the pressure between the tool **13** and back **D** and decrease in the cutting power.

Such advantages are not observable in the milling devices provided with knives of the prior art which have a linear cutting profile with a cutting line parallel to the back of the block being machined and which require a high cutting power.

As better shown in **FIGS. 7-10****,** the cylindrical body **14** of the tool **13** has a secondary axis **W** substantially parallel to the main axis **V** of the disc-shaped plate **8** and an end portion **16** having an upper surface **17,** also called back, provided with the cutting edge **15** and a recess **18,** also called chest, adapted to move the material removed from the back away from the back **D** away from the block **B.**

It should be observed that both the upper surface **17** and the recess **18** are surfaces that are convex and facing, respectively towards the back **D** of the block **B** and towards the rotation direction **R,** as shown in **FIGS. 6-9****.**

Preferably, the recess **18** may comprise a pair of substantially flat lateral surfaces **19,** parallel to the secondary axis **W** and delimited by the upper surface **17,** which also delimit the circle arc profile of the cutting edge **15.**

These lateral surfaces **19** have the function of relieving the cut so as to avoid the beading effect of the back **D** of the block **B** and they are mutually inclined by a first relief angle **ϕ** preferably equal to about 40°.

Furthermore, the recess **18** has an upper portion **18A** that is substantially concave and proximal to the cutting edge **15,** a substantially cylindrical or frustoconical portion **18B** having an axis parallel to the secondary axis **W** and a lower portion **18C** that is substantially flat and substantially parallel to the upper face **9** of the plate **8.**

In an alternative embodiment of the cutting tool **13,** not shown in the figures, the upper portion **18A** may be flat and not concave, the portion **18B** may be flat and not parallel to the secondary axis **W** and the lower portion **18C** may be curved or inclined with respect to the upper face **9,** without departing from the scope of protection of the present invention.

In the embodiment of the cutting tool **13** shown in the figures, the cutting edge **15** comprises an upper milling surface **20,** also called cutter, substantially perpendicular to the main axis **V** of the disc-shaped plate **8** and adapted to define a milling or cutting plane **π.**

The milling plane **π** is arranged above the support plane **P** and spaced apart from the latter by an adjustable distance by an operator of the binding machine **2.**

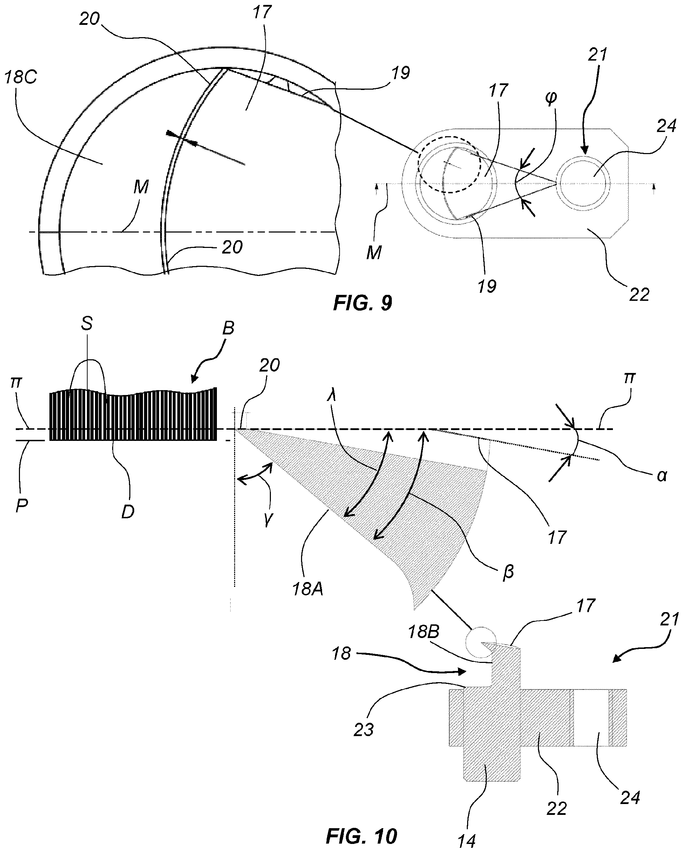

With reference to the **FIGS. 9** and **10****,** the upper milling surface **20** has a circular section shape - in plan view - having a width comprised between 0.05 and 0.25mm, preferably equal to 0.1mm.

Furthermore, the cutting tool **13** may have - at its upper surface **17** - a second relief angle **α** comprised between 5° and 15° with respect to the milling plane **π**, preferably equal to 10°, so as to reduce any friction between the cutting tool **13** and the back **D** of the block **B.**

As defined by the characteristic angles of the cutting edge **15,** the cutting tool **13** comprises:
- a cutting angle **β** comprised between 35° and 45° with respect to the milling plane **π**, preferably equal to 40°;
- a chest or machining angle **λ** comprised between 30° and 50° with respect to the milling plane **π**, preferably equal to 40°; and
- an upper clearance angle or chest angle **γ** comprised between 30° and 50° with respect to the secondary axis **W,** preferably equal to 40°.

This particular conformation of the cutting edge **15** combined with the direction of the centreline **M** guarantees an excellent cutting angle along the entire circular milling path, at the same time reducing the power required to carry out the milling operation.

Experimentally, it has been demonstrated that with a cutting edge **15** having a curved profile and a cutting angle **β** equal to 40° and constant along its entire machining stroke, the cutting tool **13** is capable of cutting and milling the back **D** excellently.

There are provided for means **21** for anchoring the cylindrical body **14** of the cutting tool **13** to the disc-shaped plate **8** so as to selectively direct the centreline **M** towards the one or the other rotation direction **R** of the plate **8.**

In an embodiment, the means **21** for anchoring each tool **13** to the disc-shaped plate **8** comprise a substantially prismatic support **22** provided with a smooth through hole **23** for forcibly inserting the cylindrical body **14** of the tool **13** and a through hole **24** for inserting a stop pin or bolt **24A.**

As better shown in **FIGS. 3-4****,** on the plate **8** there will be provided a first group of smooth through holes **25** into which there may be inserted the cylindrical body **14** of each cutting tool **13** and a second group of pairs of threaded through holes **26, 26A** which can be aligned with the through hole **24** of the prismatic support **22** and into which there may be screwed the stop pin or bolt **24A** for locking the prismatic support **22** and therefore the cutting tool **13** in position.

Suitably, all holes **25, 26, 26A** are arranged along a circumference **C** that is concentric with the central axis **V.**

Simply unscrewing and screwing the stop bolts **4A,** will allow to release or lock the anchoring means **21,** and this will not only allow to lock the position of the cutting edge **15** so that the centreline **M** is parallel to the tangent **T** on the outer peripheral edge **8A** of the disc-shaped plate **8** at the centring point **A,** but also direct the cutting edge **15** towards the clockwise or counter-clockwise rotation direction **R** of the electro-spindle **3.**

In this manner, the cutting tool **13** may be used both in binding machines **2** in which the block **B** moves from left to right with respect to the spindle **3** with the disc-shaped plate **8** rotating around the main axis **V** in a clockwise rotation direction **R**, and in machines **2** in which the block **B** moves from right to left with respect to the spindle **3** with the plate **8** rotating around the axis **V** in a counter-clockwise direction **R.**

In an embodiment, not shown in the drawings, on the disc-shaped plate **8** there may be anchored not only the cutting tools **13** of the milling device **1,** but also other types of tools for machining the back **D** such as for example roughening, corrugating or micro-corrugating tools **U.**

In this manner, the block **B** advancing along the plane **P** of the binding machine **2** will firstly interact with the cutting tools **13** and subsequently with the roughening tools **U,** not subject of the present invention.

In a per se known manner, the disc-shaped plate **8** may comprise an inner annular portion **27** provided with a plurality of brushes **28** facing towards the back **D** of the block **B** and protruding with respect to the milling plane **π** and adapted to remove any machining residues of the cutting tool **13** or roughening tool **U** from the back **D** of the blocks **B.**

According to a further aspect of the invention there is provided for a binding machine **2,** schematically shown in **FIG. 1****,** for machining the back **D** of blocks **B** of sheets **S** to be bound.

The machine **2** according to the invention comprising a support plane **P** of the back **D** of the blocks **B** along a substantially horizontal direction **H,** a station for loading the blocks **B** with the back **D** placed on the advancement plane **P,** not shown in the figures, an electro-spindle **3** with main rotation axis **V** on which there is fitted a milling device **1,** of the type described above and guide means adapted to guide the blocks **B** towards the milling device **1.**

Advantageously, the device **1** comprises one or more cutting tools **13** for milling the back **D** of the blocks **B** and of the type described above, the cutting tool **13** having, in its essential embodiment, a cylindrical body **14** and a cutting edge **15** with curved profile and centreline **M.**

Furthermore, the machine **2** comprises a milling device **1** in which there are provided for means **21** for anchoring the cylindrical body **14** of the cutting tool **13** to the plate **8** so as to provide the centreline **M** of the cutting edge **15** substantially parallel to the tangent **T** on the circular outer peripheral edge **8A** of the disc-shaped plate **8** and selectively direct such centreline **M** towards the one or the other rotation direction **R** of the plate **8.**

The milling device **1** and the binding machine **2** according to the invention are susceptible to numerous modifications and variants all falling within the inventive concept outlined in the attached claims.

Although the milling device and the binding machine have been described with particular reference to the attached figures, the reference numerals used in the description and in the claims are meant for improving the intelligibility of the invention and they do not limit the claimed scope of protection in any manner whatsoever.

Throughout the description, reference to "an embodiment" or "the embodiment" or "some embodiments" indicate that a particular characteristic, structure or element described is comprised in at least one embodiment of the object of the present invention.

Furthermore, the particular characteristics, structures or elements may be combined in any appropriate fashion in one or more embodiments.

### Industrial applicability

The present invention can be applied at industrial level given that it can be manufactured on industrial scale by industries belonging to the publishing and book binding industry.

## Claims

1. A milling device (**1**) of binding machines (**2**), for milling the back (**D**) of blocks (**B**) of sheets (**S**) to be bound, in which the machine (**2**) comprises a support plane (**P**) of the back **(**D) of the blocks (**B**) during their advancement, the device (**1**) comprising:
- a disc-shaped plate (**8**) defining a main axis (**V**) and having a substantially circular outer peripheral edge (**8A**), an upper face (9) facing the back (**D**) to be milled and a lower face (**10**) coupled to an electro-spindle (**3**);
- one or more cutting tools (**13**) which can be anchored in one or more centring points (**A**) of said upper face (**9**) to mill the back (**D**) by rotating said plate (**8**);
wherein each cutting tool (**13**) comprises a cylindrical body (**14**) having a secondary axis (**W**) substantially parallel to said main axis (**V**);
wherein said cylindrical body (**14**) comprises a cutting edge (**15**) having a curved profile with a centreline (**M**), an end portion (**16**) having an upper surface (**17**) provided with said cutting edge (**15**) and a recess (**18**) adapted to move the material removed from the back (**D**) away from the block (**B**);
wherein anchoring means (**21**) are provided for anchoring said cylindrical body (**14**) to said plate (**8**) so that said centreline (**M**) is parallel to the tangent (**T**) on the outer peripheral edge (**8A**) in the centring point (**A**) of the tool (**13**) and to selectively direct said centreline (**M**) towards the one or the other rotation direction (**R**), the arrangement being such to keep the cutting geometry of said tool (**13**) on the back (**D**) constant during the rotation of said plate (**8**) and reduce the contact surface of said cutting edge (**15**) with the back (**D**), thereby increasing the pressure between said tool (**13**) and the back (**D**) and decreasing the cutting power.

2. Device as claimed in claim 1, wherein said cutting edge (**15**) comprises an upper milling surface (**20**) substantially perpendicular to said main axis (**V**) and adapted to define a milling or cutting plane (**π**).

3. Device as claimed in claim 2, wherein said cutting edge (**15**) has - at said upper surface (**17**) - a second relief angle (**α**) comprised between 5° and 15° with respect to said milling plane (**π**), preferably equal to 10°.

4. Device as claimed in claim 2, wherein said cutting edge (**15**) comprises a cutting angle (**β**) comprised between 35° and 45° with respect to said milling plane (**π**), preferably equal to 40°.

5. Device as claimed in claim 1, wherein said cutting tool (**13**) is mounted on said disc-shaped plate (**8**) along centring points (**A**) arranged along a circumference (**C**) which is substantially concentric to said main axis (**V**).

6. Device as claimed in claim 1, wherein said anchoring means (**21**) comprise a substantially prismatic support (**22**) having a smooth through hole (**23**) into which said cylindrical body (**14**) of each cutting tool (**13**) is inserted and a through hole (**24**) for screwing a stop pin or bolt (**24A**).

7. Device as claimed in claim 6, wherein said disc-shaped plate (**8**) comprises a first group of smooth through holes (**25**) into which there can be inserted said cylindrical body (**14**) and a second group of pairs of threaded through holes (**26**, **26A**) which can be aligned with said through hole (**24**) for screwing said stop pin or bolt (**24A**) for locking said prismatic support (**22**) in position.

8. Device according to claim 1, wherein said disc-shaped plate (**8**) comprises an inner annular portion (**27**) provided with a plurality of brushes (**28**).

9. A binding machine (**2**) for processing the back (**D**) of blocks (**B**) of sheets (**S**) to be bound, comprising a support plane (**P**) for the back (**D**) of the blocks (**B**) during the advancement along a substantially horizontal direction (**H**), an electro-spindle (**3**) with main rotation axis (**V**) on which there is mounted a milling device (**1**) according to one or more of claims 1 to 8, guide means adapted to guide the blocks (**B**) towards said milling device (**1**);
wherein said milling device (**1**) comprises a disc-shaped plate (**8**) with a circular peripheral edge (**8A**) coupled to said electro-spindle (**3**) and on which there are anchored one or more cutting tools (**13**), each having a cylindrical body (**14**) having a cutting edge (**15**) with a curved profile defining a centreline (**M**), an end portion (**16**) having an upper surface (**17**) provided with said cutting edge (**15**) and a recess (**18**) adapted to move the material removed from the back (**D**) away from the block (**B**);
wherein anchoring means (**21**) are provided for locking said cylindrical body (**14**) in such a manner that said centreline (**M**) is substantially parallel to the tangent (**T**) of said outer peripheral edge (**8A**) in the respective centring point (**A**) and in such a manner to selectively direct said centreline (**M**) towards the one or the other rotation direction (**R**) of said plate (**8**).
